# EUROPÄISCHE PATENTSCHRIFT

(11) **EP 2 001 729 B1**
(45) Veröffentlichungstag und Bekanntmachung des Hinweises auf die Patenterteilung: **23.03.2011**
(21) Anmeldenummer: 07711386.8
(22) Anmeldetag: 25.01.2007
(51) Int. Cl.: B62D 3/12, F16H 55/28

(54) **ZAHNSTANGENLENKGETRIEBE MIT AUTOMATISCHER NACHSTELLUNG DES DRUCKSTÜCKS**
RACK AND PINION STEERING GEAR WITH AUTOMATIC ADJUSTMENT OF THE THRUST ELEMENT
DIRECTION À CRÉMAILLÈRE AVEC RÉGLAGE AUTOMATIQUE DE L'ÉLÉMENT DE PRESSION

(30) Priorität: 04.04.2006 DE 102006016110
(43) Veröffentlichungstag der Anmeldung: 17.12.2008
(73) Patentinhaber: ThyssenKrupp Presta SteerTec GmbH, 40476 Düsseldorf (DE)
(72) Erfinder: ROMBOLD, Manfred, 71364 Winnenden-Höfen (DE); WEIGEL, Michael, 09111 Chemnitz (DE)
(74) Vertreter: Lenzing Gerber Stute
(86) Internationale Anmeldenummer: PCT/EP2007/000631
(87) Internationale Veröffentlichungsnummer: WO 2007/118524

(56) Entgegenhaltungen:
- DE-A1- 3 835 947
- JP-A- 11 222 141
- US-A- 3 585 875
- US-A- 5 265 691

## Beschreibung

Die vorliegende Erfindung betrifft ein Zahnstangenlenkgetriebe mit einem Druckstück, das zum Andrücken einer Zahnstange und eines Ritzels gegeneinander in einem Lenkgehäuse einbringbar ist.

Ein derartiges Zahnstangenlenkgetriebe ist aus der EP 1 507 694 B1 vorbekannt. Das Druckstück dieses Lenkgetriebes weist ein Andrückelement zur Anlage an die zahnstange sowie ein Führungselement, das partiell geschlitzt und aufspreizbar ausgebildet ist und sich entlang der zylindrischen Innenwandung des Aufnahmeraumes erstreckt. Zwischen einem Anschlagstopfen und dem Andrückelement ist ein elastisches Element angeordnet, welches an seiner der Innenwandung des Aufnahmeraumes zugewandten Außenseite von dem Führungselement umgeben ist. Bei einer Bewegung des Andrückelementes in Richtung auf den Anschlagstopfen neigt das elastische Element zum Ausweichen bzw. Ausdehnen in radialer Richtung, wodurch das Führungselement gegen den Aufnahmeraum aufspreizt. Dieser Aufbau ist kompliziert. Zudem ist durch das elastische Element der erforderliche Anpressdruck auch über längere Zeit hin nicht gewährleistet.

Die US 5,265,691 A beschreibt eine Zahnstangenlenkung gemäß dem Oberbegriff des Anspruchs 1, mit einem selbsttätig nachstellenden Druckstück, welches über einen Keil zwischen der Stellschraube und dem Druckstück auf die Zahnstange hin zugestellt wird. Der Keil wird mittels einer Schraubenfeder und eines Stößels quer zur Zustellrichtung zwischen die Stellschraube und das Druckstück gedrängt. Die Anordnung aus Schraubenfeder und Stößel ist als separate Baugruppe seitlich an dem Lenkgetriebe angeordnet. Dies ist aufwendig.

Aufgabe der vorliegenden Erfindung ist es, ein Zahnstangenlenkgetriebe bereitzustellen, welches einfach in seinem Aufbau ist und einen Verschleiß der Teile ausgleicht.

Diese Aufgabe wird erfindungsgemäß mit einem Zahnstangenlenkgetriebe mit den Merkmalen des Anspruchs 1 gelöst. Weitere vorteilhafte Ausgestaltungen ergeben sich durch die Merkmale der Unteransprüche.

Das erfindungsgemäße Zahnstangenlenkgetriebe zeichnet sich vorteilhaft dadurch aus, dass das durch den Verschleiß erforderliche Nachstellen des Druckstückspiels automatisch durch das keilartige Teil ausgeglichen wird und dadurch ein Aufschwingen, sowie Geräuschbildung an Druckstück und Zahnstangen- und Ritzelverzahnung vermieden wird.

Die im Fahrbetrieb entstehende Zahnstangenbelastung wird durch die zusätzliche Druckfeder und zusätzlich durch die Nachstellkraft des durch die Ringfeder belasteten keilförmigen Teils abgestützt. Bei großer Zahnstangenbelastung, insbesondere beim Parkieren, werden durch die konischen Stirnflächen von Druckstück, Stellschraube und das ebenfalls insbesondere konische, dann lediglich im Querschnitt keilförmige Teil weiter auseinander gedrückt, bis das alle Teile sowie Druckstück und Zahnstange sicher aneinander liegen und gedrückt sind.

Das keilartige Teil ist vorteilhaft zweiteilig aus zwei halbkreisförmigen Ringelementen gebildet, wobei diese konische Flächen aufweisen, die mit ebenfalls konischen Flächen des Druckstücks und/oder der Stellschraube zusammenwirken. Die Dicke der Ringelemente nimmt dabei von außen nach innen hin ab, so dass durch ein Zusammendrücken der Ringelemente durch die Ringfeder das Druckstück und die Stellschraube auseinandergetrieben werden.

Es ist jedoch selbstverständlich möglich, das keilartige Teil einteilig (Fig. 6 und 7), sowie drei oder vierteilig (Fig. 8 und 9) auszubilden. Es muss lediglich sichergestellt werden, dass ein Spannelement bewirkt, dass das keilartige Teil bestrebt ist, sich in Richtung seiner Keilspitze vom Radius her zu verändern, d.h. bei den in den Figuren dargestellten keilartigen Teilen seinen Radius zu verringern.

Es ist selbstverständlich möglich, die Schrägflächen der Teile nicht rotationssymmetrisch auszugestalten, sondern schräggestellte ebene Andruckflächen zu wählen. Die rotationssymmetrische Ausgestaltung hat jedoch den Vorteil, dass sich die Teile im Gehäuse nicht verkannten.

Nachfolgend wird eine mögliche Ausführungsform des erfindungsgemäßen Zahnstangenlenkgetriebes anhand von Zeichnungen näher erläutert.

Es zeigen:

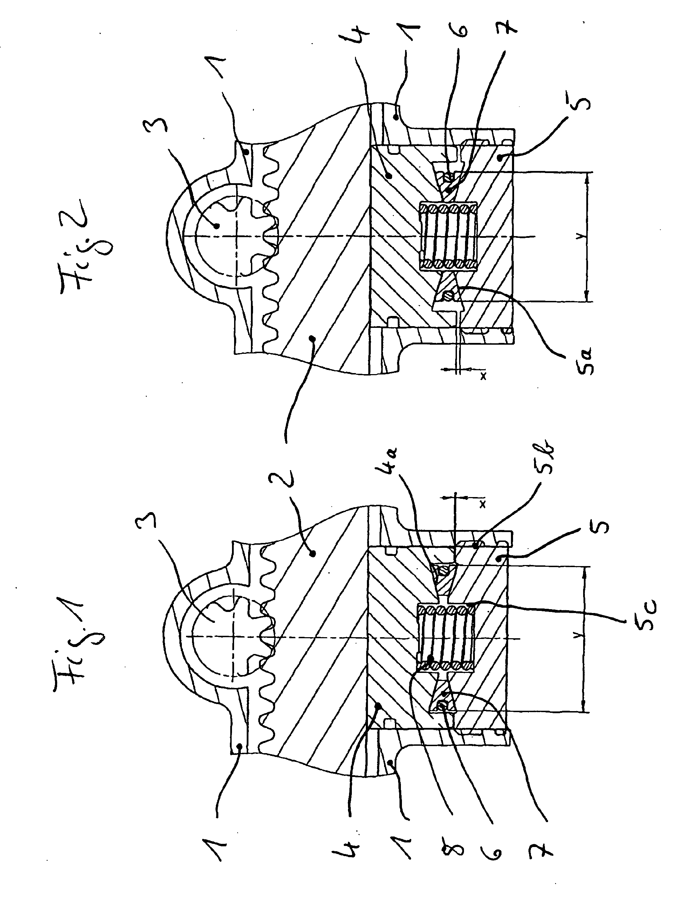

- Fig. 1:: Querschnittsdarstellung durch ein erfindungsgemäßes Zahnstangenlenkgetriebe nach der Montage;
- Fig. 2:: Querschnittsdarstellung durch ein erfindungsgemäßes Zahnstangenlenkgetriebe nach erfolgtem Verschleiß;

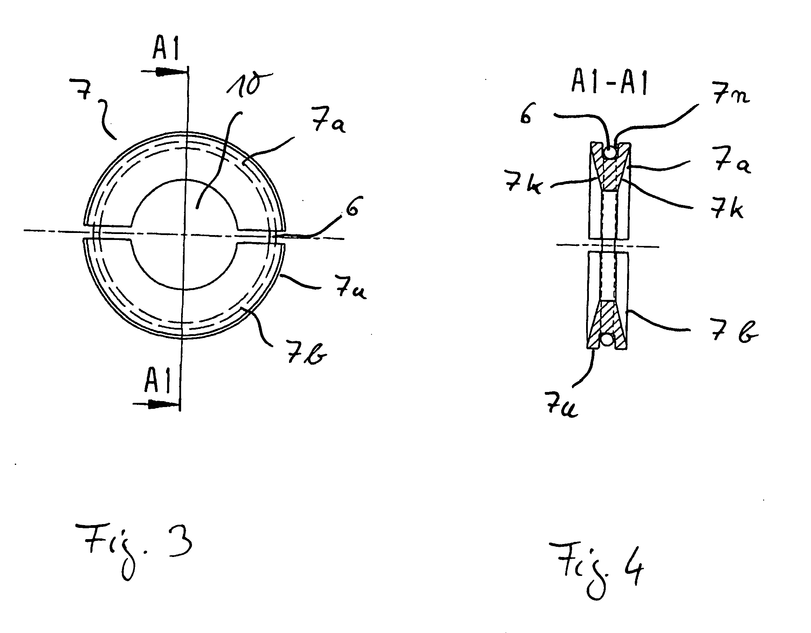

- Fig. 3:: zweiteilig ausgebildetes keilartiges Teil in der Draufsicht;
- Fig. 4:: zweiteilig ausgebildetes keilartiges Teil mit ein- gelegter Ringfeder im Querschnitt.

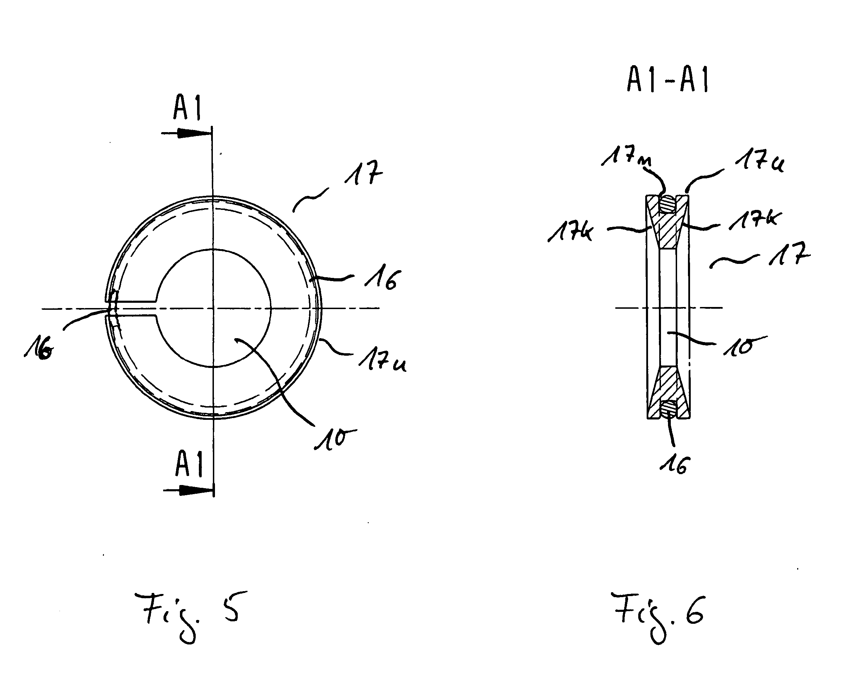

- Fig. 5:: einteilig ausgebildetes keilartiges Teil in der Draufsicht;
- Fig. 6:: einteilig ausgebildetes keilartiges Teil mit einge- legter Ringfeder im Querschnitt.

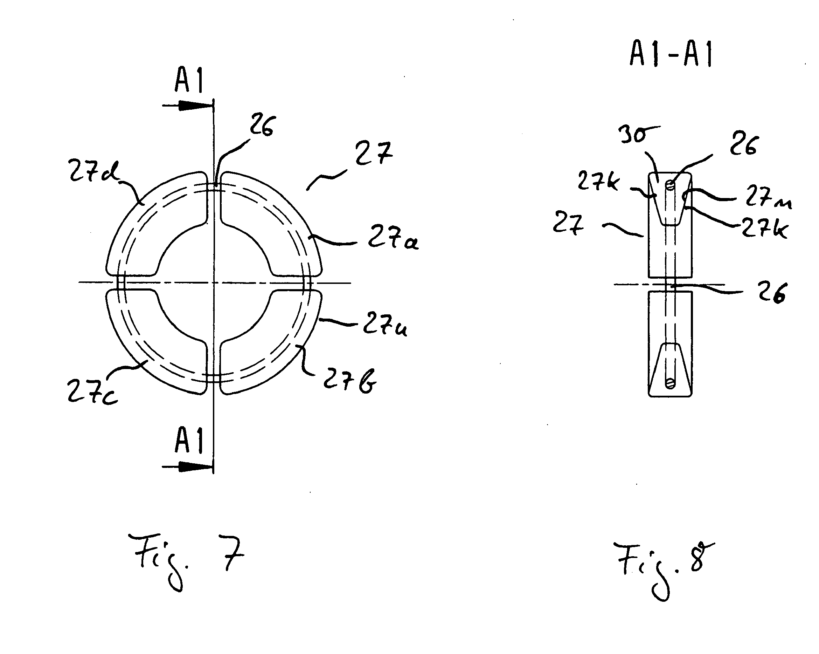

- Fig. 7:: vierteilig ausgebildetes keilartiges Teil in der Draufsicht;
- Fig. 8:: vierteilig ausgebildetes keilartiges Teil mit ein- gegossener Ringfeder im Querschnitt.

Die Figur 1 zeigt eine mögliche Ausführungsform der Erfindung, bei der die Zahnstange 2 zusammen mit dem Ritzel 3 im Gehäuse 1 einliegt. Die Zahnstange 2 wird mittels des Druckstücks 4 gegen das Ritzel 3 druckbeaufschlagt. Das Druckstück 4 liegt zusammen mit dem keilartigen Teil 7, der Druckfeder 8 sowie der Stellschraube 5 in einer Aussparung des Gehäuses 1 ein. Die Stellschraube weist an ihrer äußeren Umfangsfläche ein Außengewinde 5b auf, welches mit einem Innengewinde des Gehäuses zusammenwirkt. Durch das Einschrauben der Stellschraube 5 wird über die Druckfeder 8 das Druckstück 4 gegen die Zahnstange 2 druckbeaufschlagt und das Spiel x zwischen Zahnstange 2 und Ritzel 3 eingestellt. Die Druckfeder 8 erzeugt dabei eine definierte Vorspannung auf das Druckstück 4.

Das Druckstück 4, sowie die Stellschraube 5 weisen konische Schrägflächen 4a, 5a auf, die mit den konischen Stirnflächen 7k des keilartigen Teils 7 zusammenwirken. Die halbrunden Ringelemente 7a und 7b bilden das keilartige Teil 7. Durch die Keilflächen werden die Ringelemente 7a und 7b durch die Andruckkräfte der Stellschraube 5 und des Druckstücks 4 auf einen Abstand bzw. Durchmesser y auseinandergedrückt, wodurch wiederum die Ringfeder 6 vorgespannt wird.

Durch einen über die Lebensdauer auftretenden Verschleiß an der Zahnstangen- und Ritzelverzahnung, sowie an den Gleiteinlagen des Druckstücks 4 vergrößert sich das Spiel x zwischen Druckstück 4 und Stellschraube 5 (Fig. 2). Die durch die Ringfeder 6 miteinander vorgespannten Ringelemente 7a und 7b verringern aufgrund des Verschleißes ihren Abstand y, so dass die konischen Schrägflächen 7k, 4a und 5a stets aneinander liegen und gegeneinander druckbeaufschlagt sind. Hierdurch wird ein Schwingen der Teile zueinander verhindert.

In Fig. 3 ist das keilartige Teil 7 in der Draufsicht und in Fig. 4 im Querschnitt dargestellt. Die Ringelemente 7a und 7b bilden eine innere Öffnung 10, in der die Druckfeder 8 einliegt. Die Ringfeder 6 liegt in einer umlaufenden Nut 7n, welche in der Mantelfläche 7u angeordnet ist, ein. Die konischen Schrägflächen 7k der Ringelemente 7a, 7b sind in ihrer Steigung derart auszubilden, dass die Abnutzung der Teile über die Lebensdauer sicher ausgeglichen werden kann. Bei entsprechender Dimensionierung der Ringfeder 6 kann auf die Druckfeder 8 verzichtet werden. Dabei übernimmt die Ringfeder zusammen mit dem keilartigen Teil die Funktion der Druckfeder.

In Fig. 5 und 6 ist eine weitere mögliche Ausgestaltung des keilartigen Teils 17 dargestellt. Das Teil 17 ist einstückig ausgebildet, wobei es einen Ring bildet, welcher geschlitzt ist, so dass mittels des Spannelementes 16 der Radius des Teils 17 leicht verändert werden kann, wodurch das keilartige Teil 17 den variierenden Abstand zwischen Druckstück 4 und Stellschraube 5 ausgleichen kann. Das Spannelement 16 liegt wiederum in einer Umfangsnut 17n, welche in der Umfangsfläche 17u angeordnet ist, ein.

Die Fig. 7 und 8 zeigen eine weitere Ausführungsform des keilartigen Teils 27, wobei dieses aus vier Ringsegmenten 27a bis 27d besteht, in die das Spannelement 26 eingegossen ist. Die freiliegenden Abschnitte 26f des Spannelementes 26 wirken als Federn, welche die einzelnen Ringsegmente 27a-27d zueinander ziehen, so dass sich aufgrund der Federkräfte der Radius des keilartigen Teils 27 zu verringern versucht. Das Spannelement 26 ist dabei mittels einer Gießmasse 30 in eine V-förmige Umfangsnut 27n in den Ringsegmenten 27a-27d eingegossen.

## Patentansprüche

1. Zahnstangenlenkgetriebe mit einem Druckstück (4), das zum Andrücken einer Zahnstange (2) und eines Ritzels (3) gegeneinander in einem Lenkgehäuse (1) einbringbar ist, das Druckstück (4) sich mit seiner einen Seite gegen die Zahnstange (2) und mit seiner anderen Seite an einem keilartigen Teil (7, 17, 27) abstützt, welches sich seinerseits an einer Stellschraube abstützt, wobei das keilartige Teil (7, 17, 27) einteilig oder mindestens zweiteilig aus Ringelementen (17; 7a,7b; 27a, 27b, 27c, 27d) gebildet ist, wobei jedes Ringelement (17; 7a,7b; 27a, 27b, 27c, 27d) mindestens eine schräg zur Rotationsachse (A) angeordnete Keilfläche (17k; 7k; 27k) aufweist, welche mit einer Schrägfläche des Druckstücks (4) und/oder der Stellschraube (5) zusammenwirkt bzw, wirken **dadurch gekennzeichnet, dass** die Schrägflächen konisch ausgebildet sind.

2. Zahnstangenlenkgetriebe nach Anspruch 1, **dadurch gekennzeichnet, dass** mindestens ein Spannelement (6) das keilartige Teil (7, 17, 27) in Richtung des Zentrums des keilartigen Teils (7, 17, 27) kraftbeaufschlagt.

3. Zahnstangenlenkgetriebe nach Anspruch 1 oder 2, **dadurch gekennzeichnet, dass** eine Ringeder (6) als Spannelement das keilartige Teil oder deren Teile (7a, 7b; 17, 27a-27d) zueinander druckbeaufschlagt, insbesondere versucht, den durch das Teil (17) bzw. die Teile (7a, 7b; 27a-27d) gebildeten Radius zu verkleinern.

4. Zahnstangenlenkgetriebe nach einem der Ansprüche 1 bis 3, **dadurch gekennzeichnet, dass** das keilartige Teil (7) aus vier viertelkreisförmigen Ringelementen (27a-27d) gebildet ist, wobei jedes Ringelement (27a-27d) mindestens eine schräg zur Rotationsachse (A) angeordnete Keilfläche (27k) aufweist, welche mit einer Schrägfläche des Druckstücks (4) und/oder der Stellschraube (5) zusammenwirkt bzw. wirken.

5. Zahnstangenlenkgetriebe nach einem der Ansprüche 1 bis 3, **dadurch gekennzeichnet, dass** das keilartige Teil (17) ein c-förmiges Ringelement (17) ist, das mindestens eine schräg zur Rotationsachse (A) angeordnete Keilfläche (17k) aufweist, welche mit einer Schrägfläche des Druckstücks (4) und/oder der Stellschraube (5) zusammenwirkt bzw. wirken.

6. Zahnstangenlenkgetriebe nach einem der vorhergehenden Ansprüche, **dadurch gekennzeichnet, dass** die Ringelemente (7a, 7b, 17, 27a-27d) an ihrer außen liegenden Umfangsfläche (7u, 17u, 27u) eine Nut (7n, 17n, 27n) aufweisen, in der das Spannelement, insbesondere die Ringfeder (6) einliegt.

7. Zahnstangenlenkgetriebe nach einem der vorhergehenden Ansprüche, **dadurch gekennzeichnet, dass** mindestens ein Spannelement (6, 16, 26) in das keilartige Teil (7, 17, 27) eingegossen ist, wobei die nicht eingegossenen Abschnitte (27f) des Spannelements (27) Zugelemente oder Federn sind.

8. Zahnstangenlenkgetriebe nach einem der vorhergehenden Ansprüche, **dadurch gekennzeichnet , dass** die Seite (4a) des Druckstücks (4), welche an dem keilartige Teil (7, 17, 27) anliegt, schräg zur Längsachse des Druckstücks (4) ausgebildet.

9. zahnstangenlenkgetriebe nach einem der vorhergehenden Ansprüche, **dadurch gekennzeichnet, dass** die Seite (4a) des Druckstücks (4), welche an dem keilartigen Teil (7, 17, 27) anliegt, konisch ausgebildet ist.

10. Zahnstangenlenkgetriebe nach einem der vorhergehenden Ansprüche, **dadurch gekennzeichnet, dass** die Seite (5a) der Stellschraube (5), welche an dem keilartigen Teil (7, 17, 27) anliegt, schräg zur Einschraubrichtung der Stellschraube (5) ausgebildet.

11. Zahnstangenlenkgetriebe nach einem der vorhergehenden Ansprüche, **dadurch gekennzeichnet, dass** die Seite (5a) der Stellschraube (5), welche an dem keilartigen Teil (7, 17, 27) anliegt, konisch ausgebildet ist.

12. Zahnstangenlenkgetriebe nach einem der vorhergehenden Ansprüche, **dadurch gekennzeichnet, dass** zwischen dem Druckstück (4) und der Stellschraube (5) eine Druckfeder (8) angeordnet ist, welche das Druckstück (4) und die Stellschraube (5) versucht auseinander zu drücken.

13. Zahnstangenlenkgetriebe nach Anspruch 12, **dadurch gekennzeichnet, dass** die Druckfeder (8) zwischen den Teilen (7a, 7b, 17, 27a-27d) des keilartigen Teils (7, 17, 27) angeordnet oder von diesen umgriffen ist.

14. Zahnstangenlenkgetriebe nach einem der vorhergehenden Ansprüche, **dadurch gekennzeichnet, dass** die Stellschraube (5), das keilartige Teil (7, 17, 27) und das Druckstück (4) derart ausgebildet sind, dass bei der Erstmontage und dem Einstellen des erforderlichen Druckstückspiels das keilartige Teil (7, 17, 27) vom Druckstück (4) und der Stellschraube (5) möglichst weit gespreizt ist, d.h. die Ringfeder gespannt ist.

## Claims

1. Rack-and-pinion steering gear with a pressure piece (4), which can be inserted in order to press together a rack (2) and a pinion (3) in a steering-gear housing (1), the pressure piece (4) is supported with one of its sides against the rack (2) and its other side on a wedge-shaped part (7, 17, 27), which in turn is supported on a setting screw, wherein the wedge-shaped part (7, 17, 27) is formed as one piece or at least two pieces from annular elements (17; 7a, 7b; 27a, 27b, 27c, 27d), wherein each annular element (17; 7a, 7b; 27a, 27b, 27c, 27d) has at least one wedge surface (17k; 7k; 27k), arranged obliquely to the axis of rotation (A), which interact(s) with an oblique surface of the pressure piece (4) and/or of the setting screw (5), **characterised in that** the oblique surfaces are designed as conical in shape.

2. Rack-and-pinion steering gear according to Claim 1, **characterised in that** at least one tensioning element (6) imposes force onto the wedge-shaped part (7, 17, 27) in the direction of the centre of the wedge-shaped part (7, 17, 27).

3. Rack-and-pinion steering gear according to Claim 1 or 2, **characterised in that** an annular spring (6) as the tensioning element applies pressure to press the wedge-shaped part or its parts (7a, 7b; 17, 27a-27d) towards one another, in particular it tries to reduce the radius formed by the part (17) or the parts (7a, 7b; 27a-27d).

4. Rack-and-pinion steering gear according to one of Claims 1 to 3, **characterised in that** the wedge-shaped part (7) is formed from four quadrant-shaped annular elements (27a-27d), wherein each annular element (27a-27d) has at least one wedge surface (27k), arranged obliquely to the axis of rotation (A), which interact(s) with an oblique surface of the pressure piece (4) and/or of the setting screw (5).

5. Rack-and-pinion steering gear according to one of Claims 1 to 3, **characterised in that** the wedge-shaped part (17) is a C-shaped annular element (17), which has at least one wedge surface (17k), arranged obliquely to the axis of rotation (A), which interact(s) with an oblique surface of the pressure piece (4) and/or of the setting screw (5).

6. Rack-and-pinion steering gear according to one of the preceding claims, **characterised in that** the annular elements (7a, 7b, 17, 27a-27d) have a groove (7n, 17n, 27n) on their outer circumferential surface (7u, 17u, 27u), in which the tensioning elements, in particular the annular springs (6), are located.

7. Rack-and-pinion steering gear according to one of the preceding claims, **characterised in that** at least one tensioning element (6, 16, 26) is cast into the wedge-shaped part (7, 17, 27), wherein the sections (27f) of the tensioning element (27) which are not cast in are traction elements or springs.

8. Rack-and-pinion steering gear according to one of the preceding claims, **characterised in that** the side (4a) of the pressure piece (4) that is in contact with the wedge-shaped part (7, 17, 27) is designed obliquely to the longitudinal axis of the pressure piece (4).

9. Rack-and-pinion steering gear according to one of the preceding claims, **characterised in that** the side (4a) of the pressure piece (4) that is in contact with the wedge-shaped part (7, 17, 27) is designed as conical in shape.

10. Rack-and-pinion steering gear according to one of the preceding claims, **characterised in that** the side (5a) of the setting screw (5) that is in contact with the wedge-shaped part (7, 17, 27) is designed obliquely to the screw-in direction of the setting screw (5).

11. Rack-and-pinion steering gear according to one of the preceding claims, **characterised in that** the side (5a) of the setting screw (5) that is in contact with the wedge-shaped part (7, 17, 27) is designed as conical in shape.

12. Rack-and-pinion steering gear according to one of the preceding claims, **characterised in that** a pressure spring (8) is arranged between the pressure piece (4) and the setting screw (5), which pressure spring (8) tries to press the pressure piece (4) and the setting screw (5) apart from one another.

13. Rack-and-pinion steering gear according to Claim 12, **characterised in that** the pressure spring (8) is arranged between the parts (7a, 7b 17, 27a-27d) of the wedge-shaped part (7, 17, 27) or is surrounded by them.

14. Rack-and-pinion steering gear according to one of the preceding claims, **characterised in that** the setting screw (5), the wedge-shaped part (7, 17, 27), and the pressure piece (4) are designed in such a way that, at initial assembly and at the adjustment of the required pressure piece play, the wedge-shaped part (7, 17, 27) is spread as wide as possible by the pressure piece (4) and the setting screw (5), i.e. the annular spring is tcnsioned.

## Revendications

1. Transmission de direction à crémaillère, comprenant une pièce de poussée (4) qui peut être insérée dans un carter de direction (1) pour assurer l'appui réciproque d'une crémaillère (2) et d'un pignon (3), la pièce de poussée (4) prenant appui, avec l'un de ses côtés, contre la crémaillère (2) et, avec son autre côté, contre une pièce du type en forme de coin (7, 17, 27) qui pour sa part s'appuie sur une vis de réglage, la pièce du type en forme de coin (7, 17, 27) étant formée d'un seul tenant ou au moins en deux parties par des éléments d'anneau (17 ; 7a, 7b ; 27a, 27b, 27c, 27d), et chaque élément d'anneau (17 ; 7a, 7b ; 27a, 27b, 27c, 27d) présentant au moins une surface en coin (17k ; 7k ; 27k) agencée de manière inclinée par rapport à l'axe de rotation (A) et interagissant avec une surface inclinée de la pièce de poussée (4) et/ou de la vis de réglage (5),
**caractérisée en ce que** les surfaces inclinées sont d'une configuration conique.

2. Transmission de direction à crémaillère selon la revendication 1, **caractérisée en ce qu'**au moins un élément de serrage (6) sollicite par une force la pièce du type en forme de coin (7, 17, 27) en direction du centre de la pièce du type en forme de coin (7, 17, 27).

3. Transmission de direction à crémaillère selon la revendication 1 ou la revendication 2, **caractérisée en ce qu'**un ressort annulaire (6), en tant qu'élément de serrage, repousse la pièce du type en forme de coin ou ses parties (7a, 7b ; 17, 27a-27d) les unes vers les autres, et tente notamment de réduire le rayon formé par la pièce (17) ou respectivement les parties ou pièces (7a, 7b ; 27a-27d).

4. Transmission de direction à crémaillère selon l'une des revendications 1 à 3, **caractérisée en ce que** la pièce du type en forme de coin (7) est constituée de quatre éléments d'anneau (27a-27d) en forme de quart de cercle, chaque élément d'anneau (27a-27d) présentant au moins une surface en coin (27k) agencée de manière inclinée par rapport à l'axe de rotation (A) et interagissant avec une surface inclinée de la pièce de poussée (4) et/ou de la vis de réglage (5).

5. Transmission de direction à crémaillère selon l'une des revendications 1 à 3, **caractérisée en ce que** la pièce du type en forme de coin (17) est un élément d'anneau (17) en forme de C, qui présente au moins une surface en coin (17k) agencée de manière inclinée par rapport à l'axe de rotation (A) et interagissant avec une surface inclinée de la pièce de poussée (4) et/ou de la vis de réglage (5).

6. Transmission de direction à crémaillère selon l'une des revendications précédentes, **caractérisée en ce que** les éléments d'anneau (7a, 7b, 17, 27a-27d) présentent sur leur surface périphérique (7u, 17u, 27u) située à l'extérieur, une rainure (7n, 17n, 27n) dans laquelle vient se loger l'élément de serrage, notamment le ressort annulaire (6).

7. Transmission de direction à crémaillère selon l'une des revendications précédentes, **caractérisée en ce que** ledit au moins un élément de serrage (6, 16, 26) est noyé par moulage dans la pièce du type en forme de coin (7, 17, 27), les tronçons non noyés par moulage de l'élément de serrage (26) étant des ressorts ou des éléments de traction.

8. Transmission de direction à crémaillère selon l'une des revendications précédentes, **caractérisée en ce que** le côté (4a) de la pièce de poussée (4), qui s'appuie sur la pièce du type en forme de coin (7, 17, 27), est d'une configuration inclinée par rapport à l'axe longitudinal de la pièce de poussée (4).

9. Transmission de direction à crémaillère selon l'une des revendications précédentes, **caractérisée en ce que** le côté (4a) de la pièce de poussée (4), qui s'appuie sur la pièce du type en forme de coin (7, 17, 27), est d'une configuration conique.

10. Transmission de direction à crémaillère selon l'une des revendications précédentes, **caractérisée en ce que** le côté (5a) de la vis de réglage (5), qui s'appuie sur la pièce du type en forme de coin (7, 17, 27), est d'une configuration inclinée par rapport à la direction de vissage de la vis de réglage (5).

11. Transmission de direction à crémaillère selon l'une des revendications précédentes, **caractérisée en ce que** le côté (5a) de la vis de réglage (5), qui s'appuie sur la pièce du type en forme de coin (7, 17, 27), est d'une configuration conique.

12. Transmission de direction à crémaillère selon l'une des revendications précédentes, **caractérisée en ce qu'**entre la pièce de poussée (4) et la vis de réglage (5), est agencé un ressort de compression (8) qui a tendance à écarter la pièce de poussée (4) et la vis de réglage (5) l'une de l'autre.

13. Transmission de direction à crémaillère selon la revendication 12, **caractérisée en ce que** le ressort de compression (8) est agencé entre les parties ou pièces (7a, 7b, 17, 27a-27d) de la pièce du type en forme de coin (7, 17, 27), ou bien est entouré par celles-ci.

14. Transmission de direction à crémaillère selon l'une des revendications précédentes, **caractérisée en ce que** la vis de réglage (5), la pièce du type en forme de coin (7, 17, 27) et la pièce de poussée (4) sont conçues de façon telle, que lors du premier montage et du réglage du jeu nécessaire de la pièce de poussée, la pièce du type en forme de coin (7, 17, 27) soit soumise à son expansion la plus large possible par la pièce de poussée (4) et la vis de réglage (5), c'est-à-dire que le ressort annulaire soit tendu.
